# EUROPEAN PATENT SPECIFICATION

(11) **EP 2 689 697 B1**
(45) Date of publication and mention of the grant of the patent: **08.07.2015**
(21) Application number: 12761414.7
(22) Date of filing: 21.03.2012
(51) Int. Cl.: A47J 31/10, A47J 31/44, A47J 31/36

(54) **COFFEE MACHINE CONVENIENT FOR PACKAGE REMOVING**
KAFFEEMASCHINE MIT EINFACHER VERPACKUNGSENTFERNUNG
MACHINE À CAFÉ À DÉCAPSULAGE FACILE

(30) Priority: 22.03.2011 CN 201110070322
(43) Date of publication of application: 29.01.2014
(73) Proprietor: Ningbo Seaver Electric Appliance Co., Ltd, Yuyao, Zhejiang 315400 (CN)
(72) Inventor: WANG, Tianping, Yuyao Zhejiang 315400 (CN)
(74) Representative: Rooney, John-Paul
(86) International application number: PCT/CN2012/072733
(87) International publication number: WO 2012/126373

(56) References cited:
- CN-A- 101 791 196
- CN-A- 101 791 196
- CN-A- 101 897 544
- CN-A- 101 897 544
- CN-A- 102 133 045
- CN-U- 201 523 987
- JP-A- 2008 125 800
- JP-A- 2008 168 911

## Description

### Technical Field

The present patent application relates to a coffee machine convenient for package removing.

### Background

Traditional coffee machine components generally include a water tank, heating element and water pump. For portability, a variety of coffee, such as baked ground coffee, instant coffee, are packaged in sealed coffee packages which are similar to jelly-like packages. When use, the coffee package with coffee is placed in a coffee machine, and then the heated water is sucked into a chamber in the coffee machine where the coffee package is placed by a water pump. The water flows through the material to be extracted, such as coffee, and then hot coffee flows from the coffee machine outlet into a cup. After use, the coffee package needs to be taken outside. The traditional coffee machine requires drop the coffee package out from the chamber by hand for each operation, it is inconvenient to operate.

For the above situation, it was invented the coffee machine which allows the coffee package to be automatically dropped into the trash can in the coffee machine without requiring taking out the coffee package from the chamber by hand to drop for each time of use, and just requiring to take out the trash can from the coffee machine to drop a plurality of coffee packages after several times of use. It is easy and friend to use.

Chinese patent number ZL200710146245.5 (publication No. CN100528050C), entitled "Coffee machine capable of automatically pressing packed bale and reladling", Chinese patent number ZL200920197947.0 (publication No. CN201500016U), entitled "Package delivering and removing mechanism of coffee maker," and Chinese patent number ZL201020152088.6 (publication No. CN201752343U), entitled "Coffee machine capable of automatically removing packages," disclose the coffee machine capable of automatically removing packages.

The structure of the mechanism for automatically removing packages in the existing coffee machine is complex and occupies a large volume, and therefore requires a larger volume of the housing to accommodate the mechanism for automatically removing packages.

### Summary

The present patent application provides a coffee machine to overcome the above defects. The coffee machine in the present application can automatically remove packages and is in a simple structure and small volume.

According to the present patent application, a coffee machine convenient for package removing includes a housing which includes a package inlet, a package outlet and a brewing mechanism. The package inlet is located at an upper portion of the housing, the package outlet is located at a lower portion of the housing, and the brewing mechanism is located at a front portion of the housing and configured for sealing and injecting hot water to a coffee package. The coffee machine further includes a first mechanism which is constrained in the housing and moveable along the horizontal direction of the housing. An upper end of the first mechanism projects into the package inlet. The first mechanism includes a first arc-shaped recess; the open ends of the first arc-shaped recess incline downwardly. The coffee machine further includes a second mechanism which is rotatably set inside the housing and rotatable in a vertical plane. The second mechanism includes a second arc-shaped recess. The open ends of the second arc-shaped recess incline upwardly and opposite to the package inlet for the coffee package to be laid thereon. The coffee machine further includes a torsion spring which acts on the second mechanism to keep open ends of the second arc-shaped recess inclining upward. When the first mechanism moving horizontally to shut the second mechanism, the first arc-shaped recess and the second arc-shaped recess combine to form an extracting space for placing the coffee package; a rear side wall of the housing includes a liquid outlet channel communicating the extracting space and outside; when the first mechanism moving away from the second mechanism, the first arc-shaped recess takes the coffee package away from the second arc-shaped recess.

An arc degree of the first arc-shaped recess is slightly greater than 180 degrees, which can deform the coffee packages to entry and exit the first arc-shaped recess. An arc degree of the second arc-shaped recess is slightly less than 180 degrees, which ensure that the coffee package is reliably rest on the second arc-shaped recess. One side of the housing includes a protruded gear portion; a front end peripheral wall of the coffee package has an outward annular edge. When the first mechanism moves to a status far away from the second mechanism, the protruded gear portion contacts the annular edge of the coffee package which is located in the first arc-shaped recess.

The arc degree of the first arc-shaped recess is slightly greater than 180 degrees, arc degree of the second arc-shaped recess is slightly less than 180 degrees, so that when the first mechanism moving away from the second first mechanism, it is easy to clamp the coffee package away from the second arc-shaped recess. In order to make the coffee package downward removed, one side of the housing includes the protruded gear portion for the coffee package to be removed from the first arc-shaped recess. When the coffee package moves to a status far away from the second arc-shaped recess, the gear portion contacts the annular edge of the coffee package. The gear portion pushes the coffee package away from the first arc-shaped recess. The package is removed successfully.

To facilitate moving the first mechanism, a mobile plate which moves horizontally is constrained in the upper end surface of the housing. The mobile plate moves to close or open the package inlet. The upper end surface of the mobile plate includes an upwardly projecting handle. The first mechanism is fixed to a lower end surface of the mobile plate, and moves with the mobile plate.

The front and rear end surfaces of the first mechanism are mounted with a guide wheel respectively; front and rear surfaces of the housing are mounted with a guide groove respectively for guiding the guide wheel. A small force can be used to push the first mechanism to move by the cooperation of the guide wheel and the guide groove. The upper surface of the housing includes two isolated blocking walls; the movable plate is located between the two blocking walls. It can prevent the movable plate shaking frontward and rearward by the guiding of the blocking walls.

One side of the first mechanism which is close to the second mechanism includes an outward extending pushing wall. One side of the second mechanism is set with a contacting wall which is contactable with the pushing wall. When the first mechanism horizontally moves to a status in which it shuts the second mechanism, the pushing wall contacts with the contacting wall to form a pressure plane. The pushing wall has a certain thickness. When the first mechanism moves towards the second mechanism, the pushing wall can push the upper part of the coffee package which is located in the second arc-shaped recess in advance. A large pushing torque is obtained, which can easily push the second mechanism to overcome the torsion torque of the spring and to rotate downward. The pushing wall contacts with the contacting wall to form a pressure plane, so that the second mechanism does not rotate downward under the action of water pressure during the extraction. It can ensure that the first mechanism and second mechanism firmly clamp the coffee package. It can prevent bad sealing and leakage caused by the displacement of the coffee package; and improves the extraction efficiency.

For ease installation, the housing includes a front case and a rear case, front case and the rear case are fixed together. The second mechanism includes a rearward extending rotary shaft portion, the rear casing includes a socket portion for the rotary shaft portion to interpose; the torsion spring is set around the rotary shaft portion, one end of the torsion spring is fixed to the rear case, another end of the torsion spring abuts against the peripheral surface of the first mechanism. This is an embodiment of the second mechanism rotatably mounted on the rear case.

The rear wall of the housing is set with a recess portion. The liquid outlet channel is located in the recess portion. A pressure bracket is fixed in the recess portion; the pressure bracket and the liquid outlet channel form a liquid seal by a seal ring. The pressure bracket includes a transition channel for connecting the liquid outlet channel and the extracting space, the liquid outlet channel is installed with a backpressure plug which is biased by a back pressure spring to plug a lower end outlet of the transition channel. This structure makes the coffee beverage does not need some pressure to outflow the liquid outlet channel. It can ensure the full extraction and make the coffee flow out with less foam. This can realize a foam filter effect and get a good taste coffee.

The brewing mechanism includes two columns being spaced mounted in the housing along the front and rear direction; a fixed plate being fixed in front of the column; a piston core being fixed on a rear end surface of the fixed plate; a mounting hole being set in a rear portion of the piston core; a cold water channel being set in the piston core; a mobile container with a cavity being set around the column and located on a bottom of the fixed plate , which slips front and rear in relative to the fixed plate; two support springs being set around the two columns respectively, and acting on the mobile container to keep the mobile container in the trend of moving forward; and a valve seat being threaded connected to a lower part of the mobile container ; a water inlet channel which communicates with the hot water inlet channel being set in the valve seat, and a sealing plug being set in the water inlet channel which is biased by a spring to block a bottom outlet of the hot water channel. When moving rearward, the mobile container compresses the coffee package in the extracting space, the piston core is located in the cavity of the mobile container, the outer peripheral surface of the piston core and the inner wall of the cavity form a liquid-tight seal, the bottom surface of the cavity of the mobile container includes a front protruded insertion portion, the insertion portion passes through a mounting hole on the piston core, the insertion portion and the mounting hole form a liquid-tight seal; a hot water channel is set in the insertion portion; a lower end surface of the piston core and the cavity of the mobile container are formed a relatively closed space; a cold water channel communicates with the closed space.

The above brewing mechanism is an embodiment of the brewing part of the coffee machine. The brewing mechanism pushes the mobile container to move by the push force of the cold water, and maintain a certain lock-up pressure in the mobile container. A sealed extracting space can be formed by compressing the upper surface of the coffee package which is located in the extracting position. It simplifies the structure of the brewing part of the coffee machine, reduces the manufacturing cost. Of course, the brewing part of the coffee machine can use other existing brewing structure.

A pressing plate is set in a lower portion of the mobile container. The pressing plate includes a concave cavity, a flexible seal member is mounted in the concave cavity; the pressing plate and the flexible seal member are limited in a lower end of the mobile container by a pressing member and the valve seat. The flexible seal member is used to ensure a good seal effect when the mobile container moves downward. It can ensure a good extraction result.

The present patent application has the following advantages: The coffee package is automatically removed through the movement of the first mechanism and rotation of the second mechanism. The package can be successfully removed without additional auxiliary components for jointly clamping the package. The structure is simpler, and the volume thereof is greatly reduced.

### Brief Description of the Drawings

Fig. 1 is a perspective view of the coffee machine in the state of loading package according to an embodiment of the patent application;
Fig. 2 is a perspective view of the front case of the coffee machine according to an embodiment of the patent application;
Fig. 3 is a perspective view of the rear case of the coffee machine according to an embodiment of the patent application;
Fig. 4 is a perspective view of the first mechanism of the coffee machine according to an embodiment of the patent application;
Fig. 5 is a perspective view of the second mechanism of the coffee machine according to an embodiment of the patent application;
Fig. 6 shows the relative position of the first mechanism and the second mechanism when the coffee machine begins to load the package according to an embodiment of the patent application;
Fig. 7 shows the relative position of the first mechanism and the second mechanism when the coffee machine is in the process of extraction according to an embodiment of the patent application;
Fig. 8 shows the relative position of the first mechanism and the second mechanism when the coffee machine begins to extracting according to an embodiment of the patent application;
Fig. 9 shows the relative position of the first mechanism and the second mechanism when the coffee machine begins to remove the package according to an embodiment of the patent application;
Fig. 10 shows the relative position of the first mechanism and the second mechanism when the coffee machine is in the process of removing the package according to an embodiment of the patent application;
Fig. 11 shows the relative position of the first mechanism and the second mechanism when the coffee machine has removed the package according to an embodiment of the patent application;
Fig. 12 is a rear view of the coffee machine according to an embodiment of the patent application;
Fig. 13 is a front view f the coffee machine according to an embodiment of the patent application;
Fig. 14 is the A - A sectional view taken along from Fig. 12;
Fig. 15 is the B - B sectional view taken along from Fig. 13;
Fig. 16 is the C - C sectional view taken along from Fig. 13; and
Fig. 17 is a perspective view of the coffee machine taking off the front case according to an embodiment of the patent application.

### Detailed Description

The present patent application will be further described with reference to the drawings. The following embodiments are used to illustrate the present patent application rather than limit the present patent application.

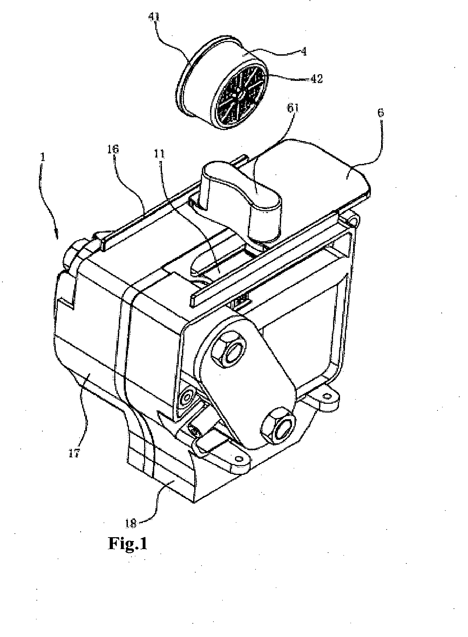

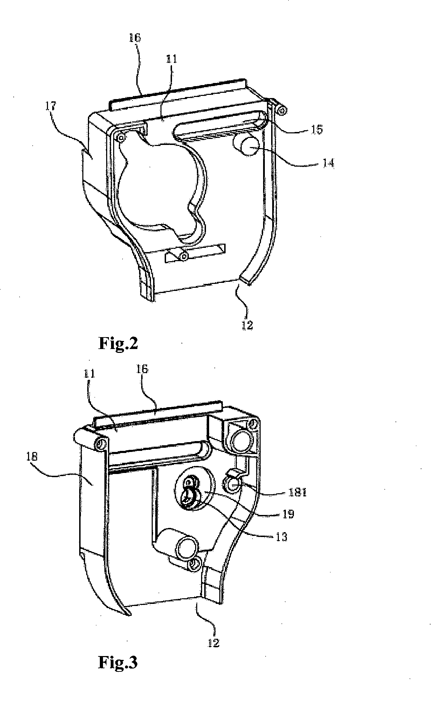

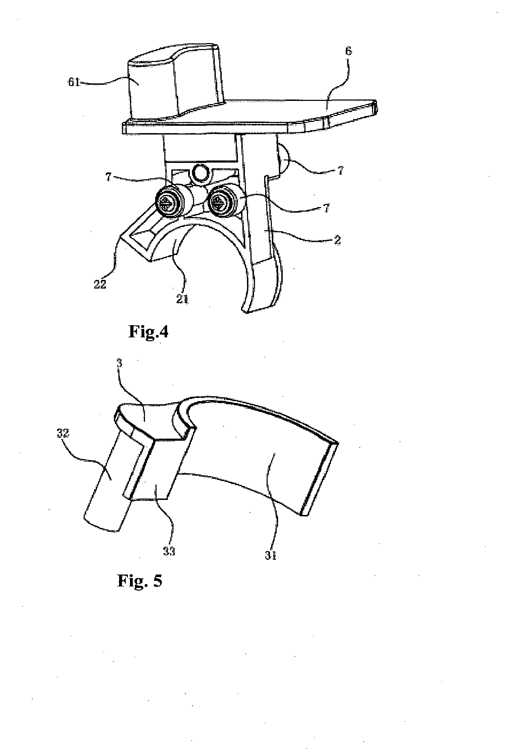

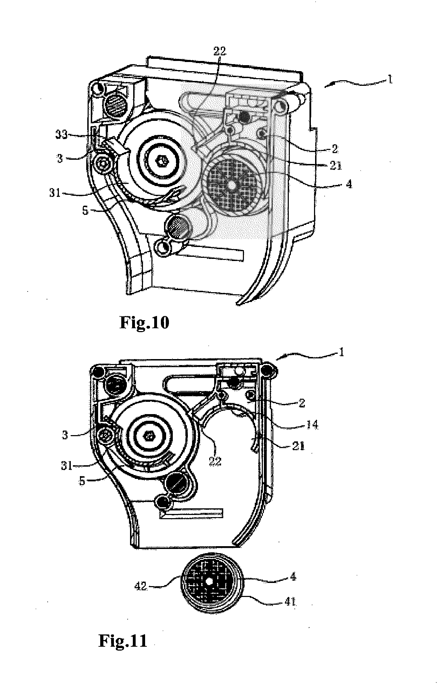

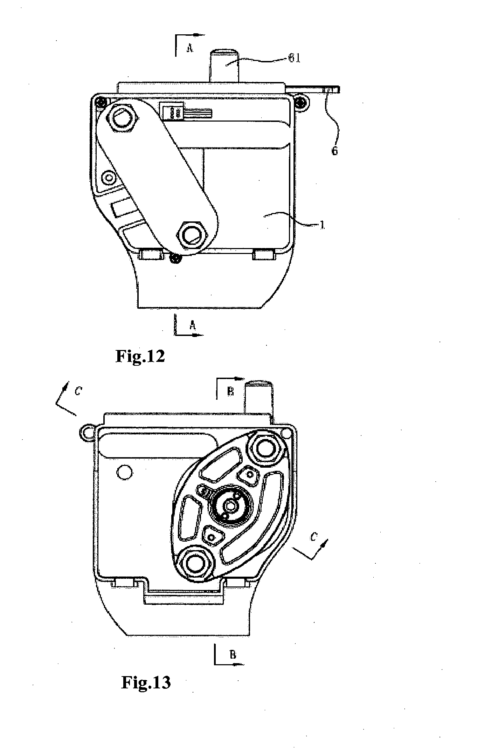

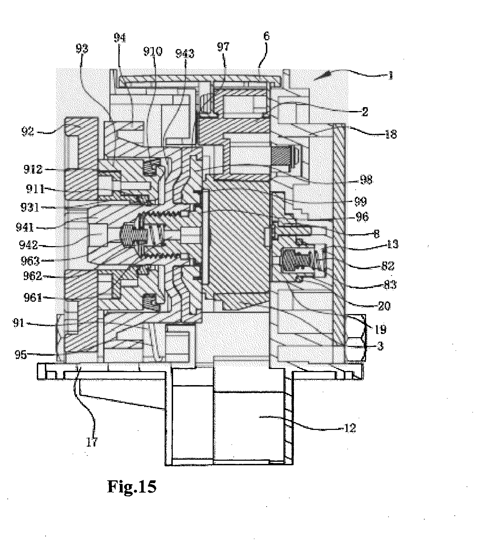

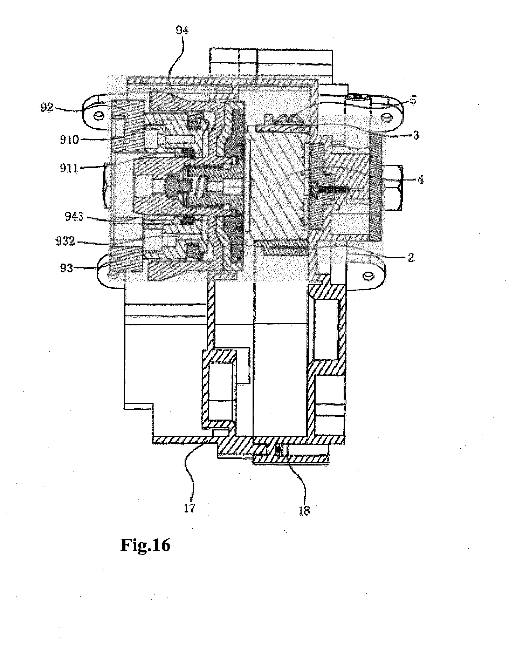

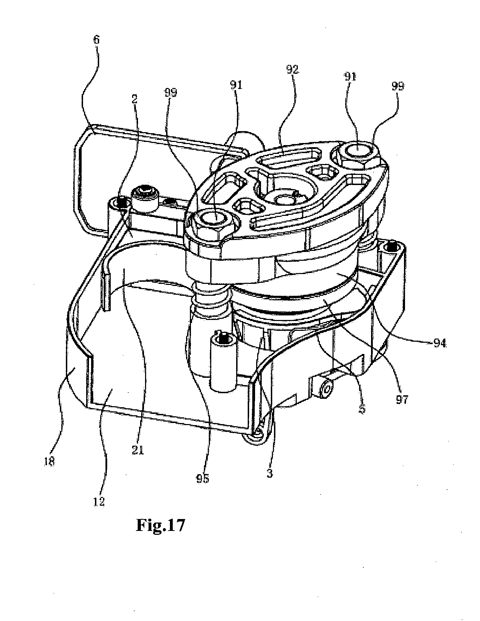

Referring to Figs. 1-17, according to an embodiment of the patent application, a coffee machine convenient for package removing includes a housing 1. The housing 1 includes a front case 17 and a rear case 18. The front case 17 and the rear case 18 are fixed together by screws. The upper portion of the housing 1 has a package inlet 11. The lower portion of the housing 1 has a package outlet 12. A mobile plate 6, which moves horizontally, is located in the upper end surface of the housing 1. The mobile plate 6 moves to close or open the package inlet 11. The upper surface of the housing 1 has two isolated blocking walls 16. The mobile plate 6 is located between the two blocking walls 16. The upper end surface of the mobile plate 6 has an upwardly projecting handle 61 to facilitate moving the mobile plate 6. The front portion of the housing 1 has a brewing mechanism for lateral sealing and injecting hot water to a coffee package 4.

A first mechanism 2 is constrained in the housing 1 and moveable along the horizontal direction of the housing 1. The first mechanism 2 is fixed to the lower end surface of the mobile plate 6, and can slide with the mobile plate 6. Thus, moving the mobile plate 6 can drive the first mechanism to slide horizontally. The lower portion of the first mechanism 2 has a first arc-shaped recess 21. The arc degree of the first arc-shaped recess 21 is slightly greater than 180 degrees, which can deform the coffee packages 4 to entry and exit the first arc-shaped recess 21. The open ends of the first arc-shaped recess 21 incline downwardly. The connecting line of the open ends of the first arc-shaped recess 21 is at an acute angle with the horizontal direction.

The front and rear end surface of the first mechanism 2 have a guide wheel 7 respectively, which drive the first mechanism 2 and make the first mechanism 2 move easily. The front and rear end surface of the housing 1 have two guide grooves 15 for guiding the guide wheel 7.

A second mechanism 3 is rotatably set inside the housing 1 and capable of rotating in a vertical plane. The second mechanism 3 has a rearward extending rotary shaft portion 32. The rear casing 18 includes a socket portion 181 for the rotary shaft portion 32 to interpose. The upper portion of the second mechanism 3 has a second arc-shaped recess 31. The arc degree of the second arc-shaped recess 31 is slightly less than 180 degrees, which ensure that the coffee package 4 can be reliably rest on the second arc-shaped recess 31. The open ends of the second arc-shaped recess 31 incline upwardly and opposite to the package inlet 11 for the coffee package 4 having a circular edge 41 to be laid thereon. The connecting line of the open ends of the second arc-shaped recess 31 is at an acute angle with the horizontal direction.

A torsion spring 5 is set around the rotary shaft portion 32. One end of the torsion spring 5 is fixed to the rear case 18, the other end of the torsion spring 5 abuts against the peripheral surface of the first mechanism 2, so that the torsion spring 5 acts on the second mechanism 3 to keep the open ends of the second arc-shaped recess 31 inclining upward.

When the first mechanism 2 moves horizontally to a status in which it shut the second mechanism 3, the first arc-shaped recess 21 and the second arc-shaped recess 31 combine to form an extracting space for placing the coffee package 4. The rear side wall of the housing 1 has a liquid outlet channel 13 communicating the extracting space and the outside. When the first mechanism 2 moves to a status far away from the second mechanism 3, the first arc-shaped recess 21 clamps the coffee package 4 away from the second arc-shaped recess 31.

The rear wall of the housing 1 (i.e., the rear casing 18) is set with a recess portion 19. The liquid outlet channel 13 is located in the recess portion 19. A pressure bracket 8 is fixed in the recess portion 19. The pressure bracket 8 and the liquid outlet channel 13 form a liquid seal by a seal ring 20. The pressure bracket 8 has a transition channel 81 for connecting the liquid outlet channel 13 and the extracting space. The liquid outlet channel 13 is installed with a backpressure plug 83 which is biased by a back pressure spring 82 to plug the lower end outlet of the transition channel 81.

One side of the housing 1 (i.e., the rear case 18) has a protruded gear portion 14. When the first mechanism 2 moves to a status far away from the second mechanism 3, the protruded gear portion 14 contacts the annular edge 41 of the coffee package 4 which is located in the first arc-shaped recess 21. The side of the first mechanism 2 which is close to the second mechanism 3 has an outward extending pushing wall 22. One side of the second mechanism 3 has a contacting wall 33 which can contact the pushing wall 22. When the first mechanism 2 moving horizontally to close the second mechanism 3, the pushing wall 22 and the contacting wall 33 are contacted to form a pressure plane X.

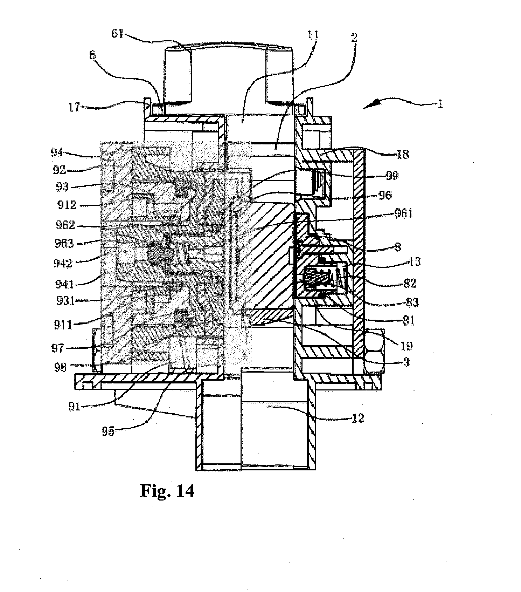

Referring to Figs. 14-17, the brewing mechanism includes: two columns 91, a fixed plate 92, a piston pin 93, a mobile container 94, a piston core 93, two support springs 95, a valve seat 96

Two columns 91 are spaced mounted in the housing 1 along the front and rear direction. The upper portion of each column 91 is a stepped shaft portion.

Two sides of the fixed plate 92 are located on the stepped shaft portion of the corresponding column 91, and locked by the nut 99 which is in the external side of the stepped shaft portion.

The piston core 93 is fixed on the rear end surface of the fixed plate 92. The front portion of the piston core 93 has a cavity; the rear portion of the piston core 93 has a mounting hole 931. The piston core 93 is set with a cold water channel 932.

The mobile container 94 with a cavity is set around the column 91 and is located on the bottom of the fixed plate 92 and can slip front and rear in relative to the fixed plate 92. When moving rearward, the mobile container 94 compresses the coffee package 4 in the extracting space.

The piston core 93 is located in the cavity. A first seal ring 910 is set between the outer peripheral surface of the piston core 93 and the inner wall of the cavity to form a liquid-tight seal. The bottom surface of the cavity of the mobile container 94 has a front protruded insertion portion 941. The insertion portion 941 passes through a mounting hole 931 on the piston core. A second seal ring 911 is set between the insertion portion 941 and the mounting hole 931 to form a liquid-tight seal. The second sealing ring 911 is pressed in the cavity of the piston core 93 through a press block 941 which is embedded in the mounting hole 931. A hot water channel 942 is set in the insertion portion 941. The lower end surface of the piston core 93 and the cavity of the mobile container 94 are formed a relatively closed space 943. A cold water channel 932 communicates with the closed space 943.

Two support springs 95 are set around the two columns 91 respectively, and act on the mobile container 94 to keep the mobile container 94 in the trend of moving forward.

The valve seat 96 is threaded connected to the lower part of the mobile container 94. A water inlet channel 961 which communicates with the hot water inlet channel 961 is set in the valve seat 96. The water inlet channel 961 is set with a sealing plug 963 which is biased by a spring 962 to block the bottom outlet of the hot water channel 942.

The lower portion of the mobile container 94 is set with a pressing plate 97. The pressing plate 97 has a concave cavity. A flexible seal member 98 is mounted in the concave cavity. The pressing plate 97 and the flexible seal member 98 are limited in the lower end of the mobile container 94 by a pressing member 99 and the valve seat 96.

In this embodiment, the coffee package 4 is substantially in a cylindrical shape. The upper and lower surfaces of the coffee package 4 are flexible and arranged many small holes 42. The edges around the coffee package 4 are rigid. The upper portion of the coffee package 4 has an outward annular edge 41, which is also a regular coffee package structure. The mobile container 94 moves down to an extraction position, the flexible seal member 98 of the pressing plate 97 and the upper end surface of the coffee package 4 combine to form a closed space.

The package inlet 11 of the housing is in the convex shape, which is similar to that of the coffee package 4. This ensures that the coffee package 4 is not reversely placed and the normal operation of extraction.

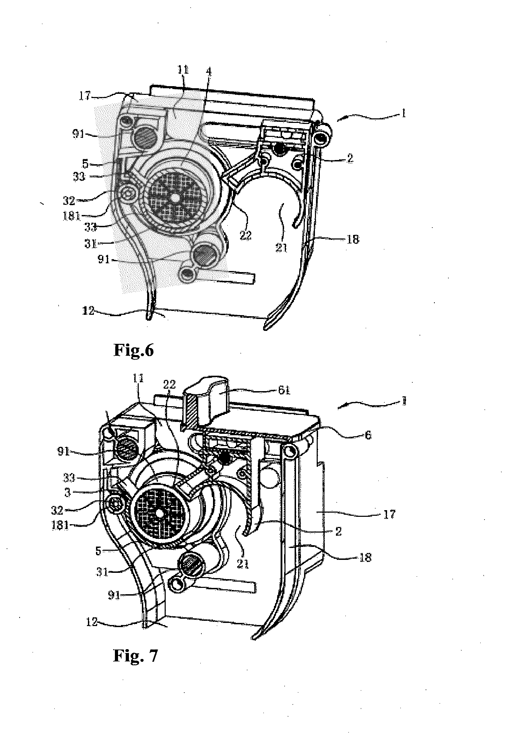

The operation principle and process of the subject embodiment are as follows:
Load and delivery package process: as shown in Figs. 6-8, horizontal moving the mobile plate 6 to expose the package inlet 11, the coffee package 4 falls into the second arc-shaped recess 31 of the second mechanism 3. And then reverse horizontal moving the mobile plate 6, the side edge of the pushing wall 22 of the first mechanism 2 contacts with the outer wall of the coffee package 4 which is exposed from the second arc-shaped recess 31. Continue moving the first mechanism 2, the coffee package 4 and the second mechanism 3 are compressed by the first mechanism 2. The second mechanism 3 overcomes the torque of the torsion spring 5 and rotates downward. When the first mechanism 2 horizontal moves to the status which is above the second mechanism 3, the second mechanism 3 is reset under the action of the torsion spring 3. The first arc-shaped recess 21 and the second arc-shaped recess 31 combine to form an extracting space for placing the coffee package 4. The coffee package 4 is located below the extracting mechanism and in the extracting position.

Extract process: as shown in Figs. 14 to 16, supply cold water, the cold water passes through the cold water channel 932 and flows into the closed space 943 formed by the lower end surface of the piston core 93 and the cavity of the mobile container 94. With the pressure increase in the closed space 943, the cold water pushes the mobile container 94 to overcome the force of the support spring 95 and to move rearward in relative to the fixed plate 92 and the piston core 93. The pressing platen 97 mounted on the mobile container 94 also moves rearward accordingly. Continue to maintain a certain water pressure, until the lower end surface of the pressing plate 97 and the upper end surface of the arc-shaped recess 31 of the coffee package 4 closely contact and form a closed extracting space. Supply hot water, the hot water passes through the hot water channel 942 and acts on the sealing plug 963. The sealing plug 963 is open when reaching a certain pressure. The hot water enters into the coffee package 4 by the water inlet channel 961 for extraction. When the pressure of the extracted beverage reaches a certain pressure, the hot water opens the backpressure plug 83. The beverage outflows from the transition channel 81 and the liquid outlet channel 8 for the user's drinking.

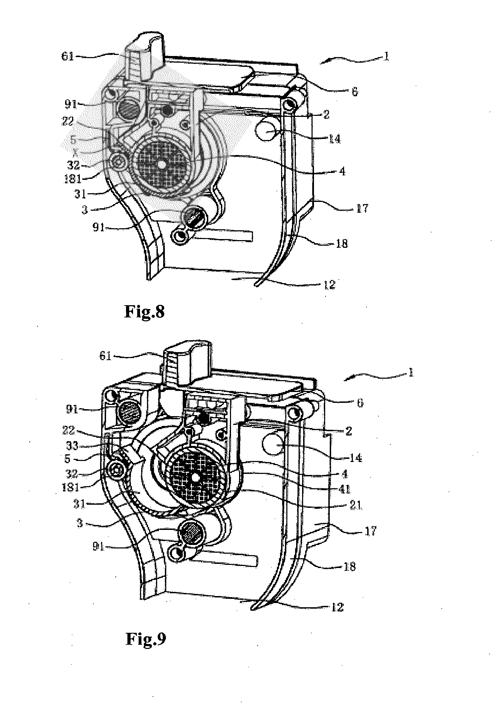

Package remove process: as shown in Figs. 9-11, when horizontal moving the mobile plate 6, the first mechanism 2 moves to a status far away from the second mechanism 3 together with the mobile plate 6. The coffee package 4 moves away from the second mechanism 3 together with the first mechanism 2, driven by the first arc-shaped recess 21. Under the compression action of the coffee package 4, the second mechanism 3 overcomes the torque of the torsion spring 5 and rotates downward. The second mechanism 3 is reset under the action of the torsion spring 3 until the first mechanism 2 horizontal moving to the status which is away from the second mechanism 3. The gear portion 14 contacts the annular edge 41 of the coffee package 4 which is located in the first arc-shaped recess 21. The gear portion 14 pushes the coffee package 4 away from the first arc-shaped recess 21. The coffee package 4 is out of the restriction of the first arc-shaped recess 21 and is removed at the package outlet 12. The package is removed successfully.

## Claims

1. A coffee machine convenient for package removing comprising:
a housing (1) which comprises a package inlet (11), a package outlet (12), and a brewing mechanism; the package inlet (11) is located at an upper portion of the housing (1), the package outlet (12) is located at a lower portion of the housing (1), the brewing mechanism is located at a front portion of the housing (1) and configured for sealing and injecting hot water to a coffee package (4);
a first mechanism (2) which is constrained in the housing (1) and moveable along the horizontal direction of the housing (1), an upper end of the first mechanism (2) projects into the package inlet (11), the first mechanism (2) comprises a first arc-shaped recess (21), the open ends of the first arc-shaped recess (21) incline downwardly;
a second mechanism (3) which is rotatably set inside the housing (1) and rotatable in a vertical plane, the second mechanism (3) comprises a second arc-shaped recess (31), open ends of the second arc-shaped recess (31) incline upwardly and opposite to the package inlet (11) for the coffee package (4) to be laid thereon;
a torsion spring (5) which acts on the second mechanism (3) to keep open ends of the second arc-shaped recess (31) inclining upwardly;
wherein when the first mechanism (2) moves horizontally to shut the second mechanism (3), the first arc-shaped recess (21) and the second arc-shaped recess (31) combine to form an extracting space for placing the coffee package (4), a rear side wall of the housing (1) comprises a liquid outlet channel (13) communicating the extracting space with the outside; when the first mechanism (2) moves away from the second mechanism (3), the first arc-shaped recess (21) takes the coffee package (4) away from the second arc-shaped recess (31).

2. The coffee machine convenient for package removing according to claim 1, **characterized in that**: an arc degree of the first arc-shaped recess (21) is slightly greater than 180 degrees, which can deform the coffee packages (4) to entry and exit the first arc-shaped recess (21); an arc degree of the second arc-shaped recess (31) is slightly less than 180 degrees, which ensure that the coffee package (4) is reliably rest on the second arc-shaped recess (31); one side of the housing (1) comprises a protruded gear portion (14), a front end peripheral wall of the coffee package (4) has an outward annular edge (41), when the first mechanism (2) moving away from the second mechanism (3), the protruded gear portion (14) contacts the annular edge (41) of the coffee package (4) which is located in the first arc-shaped recess (21).

3. The coffee machine convenient for package removing according to claim 1, **characterized in that**: a mobile plate (6) which moves horizontally is constrained in an upper end surface of the housing (1), the mobile plate (6) moves to close or open the package inlet (11); an upper end surface of the mobile plate (6) comprises an upwardly projecting handle (61); the first mechanism (2) is fixed to a lower end surface of the mobile plate (6), and moves with the mobile plate (6).

4. The coffee machine convenient for package removing according to claim 3, **characterized in that**: front and rear end surfaces of the first mechanism (2) are mounted with a guide wheel (7) respectively, front and rear surfaces of the housing (1) are mounted with a guide groove (15) respectively for guiding the guide wheel (7).

5. The coffee machine convenient for package removing according to claim 3, **characterized in that**: an upper surface of the housing (1) comprises two isolated blocking walls (16); the mobile plate (6) is located between the two blocking walls (16).

6. The coffee machine convenient for package removing according to claim 1, **characterized in that**: one side of the first mechanism (2) which is close to the second mechanism (3) comprises an outward extending pushing wall (22), one side of the second mechanism (3) is set with a contacting wall (33) which is contactable with the pushing wall (22); when the first mechanism (2) moving horizontally to shut the second mechanism (3), the pushing wall (22) and the contacting wall (33) are contacted to form a pressure plane (X).

7. The coffee machine convenient for package removing according to claim 1, **characterized in that**: the housing (1) comprises a front case (17) and a rear case (18), front case (17) and the rear case (18) are fixed together; the second mechanism (3) comprises a rearward extending rotary shaft portion (32), the rear casing (18) comprises a socket portion (181) for the rotary shaft portion (32) to interpose; the torsion spring (5) is set around the rotary shaft portion (32), one end of the torsion spring (5) is fixed to the rear case (18), another end of the torsion spring (5) abuts against the peripheral surface of the first mechanism (3).

8. The coffee machine convenient for package removing according to claim 1, **characterized in that**: the rear wall of the housing (1) is set with a recess portion (19), the liquid outlet channel (13) is located in the recess portion (19); a pressure bracket (8) is fixed in the recess portion (19), the pressure bracket (8) and the liquid outlet channel (13) form a liquid seal by a seal ring (20), the pressure bracket (8) comprises a transition channel (81) for connecting the liquid outlet channel (13) and the extracting space, the liquid outlet channel (13) is installed with a backpressure plug (83) which is biased by a back pressure spring (82) to plug a lower end outlet of the transition channel (81).

9. The coffee machine convenient for package removing according to any one of claims 1-8, **characterized in that**: the brewing mechanism comprises:
two columns (91) being spaced mounted in the housing (1) along the front and rear direction;
a fixed plate (92) being fixed in front of the column (91);
a piston core (93) being fixed on a rear end surface of the fixed plate (92), a mounting hole (931) being set in a rear portion of the piston core (93), a cold water channel (932) being set in the piston core (93);
a mobile container (94) with a cavity being set around the column (91) and located on a bottom of the fixed plate (92), which slips front and rear in relative to the fixed plate (92);
two support springs (95) being set around the two columns (91) respectively, and acting on the mobile container (94) to keep the mobile container (94) in a trend of moving forward; and
a valve seat (96) being threaded connected to a lower part of the mobile container (94); a water inlet channel (961) which communicates with the hot water inlet channel (961) being set in the valve seat (96), and a sealing plug (963) being set in the water inlet channel (961) which is biased by a spring (962) to block a bottom outlet of the hot water channel (942);
wherein when moving rearward, the mobile container (94) compresses the coffee package (4) in the extracting space, the piston core (93) is located in the cavity of the mobile container (94), the outer peripheral surface of the piston core (93) and the inner wall of the cavity form a liquid-tight seal, the bottom surface of the cavity of the mobile container (94) comprises a front protruded insertion portion (941), the insertion portion (941) passes through a mounting hole (931) on the piston core, the insertion portion (941) and the mounting hole (931) form a liquid-tight seal; a hot water channel (942) is set in the insertion portion (941); a lower end surface of the piston core (93) and the cavity of the mobile container (94) are formed a relatively closed space (943); a cold water channel (932) communicates with the closed space (943).

10. The coffee machine convenient for package removing according to claim 9, **characterized in that**: a pressing plate (97) is set in a lower portion of the mobile container (94); the pressing plate (97) comprises a concave cavity, a flexible seal member (98) is mounted in the concave cavity; the pressing plate (97) and the flexible seal member (98) are limited in a lower end of the mobile container (94) by a pressing member (99) and the valve seat (96).

## Patentansprüche

1. Kaffeemaschine mit einfacher Portionspackungsentfernung, umfassend:
ein Gehäuse (1) mit einem Portionspackungseinlass (11), einem Portionspackungsauslass (12) und einem Brühmechanismus; wobei der Portionspackungseinlass (11) in einem oberen Bereich des Gehäuses (1) liegt, der Portionspackungsauslass (12) in einem unteren Bereich des Gehäuses (1) liegt und der Brühmechanismus in einem vorderen Bereich des Gehäuses (1) liegt und konfiguriert ist für den Einschluss und das Einspritzen von heißem Wasser in eine Portionskaffeepackung (4);
einen ersten Mechanismus (2), der in dem Gehäuse (1) gehalten und entlang der horizontalen Richtung des Gehäuses (1) bewegbar ist, wobei ein oberes Ende des ersten Mechanismus (2) in den Portionspackungseinlass (11) hinein vorspringt, wobei der erste Mechanismus (2) eine erste bogenförmige Vertiefung (21) aufweist, deren offene Enden sich nach unten neigen;
einen zweiten Mechanismus (3), der drehbar in das Gehäuse (1) eingesetzt ist und sich in einer vertikalen Ebene drehen kann, wobei der zweite Mechanismus (3) eine zweite bogenförmige Vertiefung (31) aufweist, deren offene Enden sich nach oben neigen und dem Portionskaffeepackungseinlass (11) gegenüberliegen, zum Ablegen einer Portionskaffeepackung in der Vertiefung;
eine Torsionsfeder (5), die auf den zweiten Mechanismus (3) wirkt, um die offenen Enden der zweiten bogenförmigen Vertiefung (31) nach oben geneigt zu halten;
wobei sich die erste bogenförmige Vertiefung (21) und die zweite bogenförmige Vertiefung (31) zusammenschließen, um einen Extraktionsraum für das Deponieren der Portionskaffeepackung (4) zu bilden, wenn sich der erste Mechanismus (2) zum Schließen des zweiten Mechanismus (3) horizontal bewegt, wobei eine rückseitige Wand des Gehäuses (1) einen Flüssigkeitsauslasskanal (13) enthält, der den Extraktionsraum mit der Außenseite in Verbindung setzt;
wobei die erste bogenförmige Vertiefung (21) die Portionskaffeepackung (4) aus der ersten bogenförmigen Vertiefung (31) entfernt, wenn sich der erste Mechanismus (2) von dem zweiten Mechanismus (3) weg bewegt.

2. Kaffeemaschine mit einfacher Portionspackungsentfernung gemäß Anspruch 1, **dadurch gekennzeichnet,**
**dass** ein Wölbungsgrad der ersten bogenförmigen Vertiefung (21) geringfügig größer als 180 Grad ist und die Kaffeeportionspackungen (4) derart verformen kann, dass diese sich in die und aus der ersten bogenförmigen Vertiefung (21) bewegen;
**dass** ein Wölbungsgrad der zweiten bogenförmigen Vertiefung (31) geringfügig kleiner als 180 Grad ist und sicherstellt, dass die Kaffeeportionspackung (4) sicher in der zweiten bogenförmigen Vertiefung (31) aufliegt;
**dass** eine Seite des Gehäuses (1) einen vorspringenden Zahnradbereich (14) umfasst und eine stirnseitige Umfangswand der Kaffeeportionspackung (4) eine äußere ringförmige Kante (41) hat, wobei der vorspringende Zahnradbereich (14) die ringförmige Kante (41) der in der ersten bogenförmigen Vertiefung (21) liegenden Portionskaffeepackung (4) kontaktiert, wenn sich der erste Mechanismus (2) von dem zweiten Mechanismus (3) wegbewegt.

3. Kaffeemaschine mit einfacher Portionspackungsentfernung gemäß Anspruch 1, **dadurch gekennzeichnet,**
**dass** eine sich horizontal bewegende mobile Platte (6) in einer oberen Endfläche des Gehäuses (1) gehalten ist, wobei sich die mobile Platte (6) bewegt, um den Portionspackungseinlass (11) zu schließen und zu öffnen;
**dass** eine obere Endfläche der mobilen Platte (6) einen nach oben vorspringenden Griff (61) aufweist;
und **dass** der erste Mechanismus (2) an einer unteren Endfläche der mobilen Platte (6) befestigt ist und sich mit der mobilen Platte (6) bewegt.

4. Kaffeemaschine mit einfacher Portionspackungsentfernung gemäß Anspruch 3, **dadurch gekennzeichnet,**
**dass** die vordere und die hintere Endfläche des ersten Mechanismus (2) jeweils mit einem Führungsrad (7) und die Vorderfläche und Rückfläche des Gehäuses (1) jeweils mit einer Führungsnut (15) zum Führen des Führungsrads (7) versehen sind.

5. Kaffeemaschine mit einfacher Portionspackungsentfernung gemäß Anspruch 3, **dadurch gekennzeichnet,**
**dass** eine Oberfläche des Gehäuses (1) zwei isolierte Sperrwände (16) aufweist; wobei die mobile Platte (6) zwischen den beiden Sperrwänden (16) liegt.

6. Kaffeemaschine mit einfacher Portionspackungsentfernung gemäß Anspruch 1, **dadurch gekennzeichnet,**
**dass** eine Seite des ersten Mechanismus (2), die in der Nähe des zweiten Mechanismus (3) liegt, eine sich nach außen erstreckende Druckwand (22) hat und eine Seite des zweiten Mechanismus (3) mit einer Kontaktwand (33) für den Kontakt mit der Druckwand (22) versehen ist; wobei die Druckwand (22) und die Kontaktwand (33) in Kontakt gebracht werden, um eine Druckebene (X) zu bilden, wenn sich der erste Mechanismus (2) horizontal bewegt, um den zweiten Mechanismus (3) zu schließen.

7. Kaffeemaschine mit einfacher Portionspackungsentfernung gemäß Anspruch 1, **dadurch gekennzeichnet,**
**dass** das Gehäuse (1) ein vorderes Gehäuse (17) und ein hinteres Gehäuse (18) umfasst, wobei das vordere Gehäuse (17) und das hintere Gehäuse (18) aneinander befestigt sind;
**dass** der zweite Mechanismus (3) einen sich nach hinten erstreckenden Drehwellenabschnitt (32) hat, wobei das hintere Gehäuse (18) einen Hülsenbereich (181) zum Einfügen des Drehwellenabschnitts (32) aufweist;
und **dass** die Torsionsfeder (5) rund um den Drehwellenabschnitt (32) angeordnet ist, wobei ein Ende der Torsionsfeder (5) an dem hinteren Gehäuse (18) befestigt ist und ein anderes Ende der Torsionsfeder (5) an der Umfangsfläche des ersten Mechanismus (3) anliegt.

8. Kaffeemaschine mit einfacher Portionspackungsentfernung gemäß Anspruch 1, **dadurch gekennzeichnet,**
**dass** die Rückwand des Gehäuses (1) mit einem Ausnehmungsbereich (19) versehen ist, wobei sich der Flüssigkeitsauslasskanal (13) in dem Ausnehmungsbereich (19) befindet;
**dass** eine Druckhalterung (8) in dem Ausnehmungsbereich (19) befestigt ist, wobei die Druckhalterung (8) und der Flüssigkeitsauslasskanal (13) durch einen Dichtungsring (20) eine Flüssigkeitsdichtung bilden, wobei die Druckhalterung (8) einen Übergangskanal (81) zum Verbinden des Flüssigkeitsauslasskanals (13) und des Extraktionsraums umfasst und wobei der Flüssigkeitsauslasskanal (13) mit einem Gegendruckstopfen (83) versehen ist, der durch eine Gegendruckfeder (82) vorgespannt ist, um einen unteren Endauslass des Übergangskanals (81) zu verschließen.

9. Kaffeemaschine mit einfacher Portionspackungsentfernung gemäß einem der Ansprüche 1 bis 8, **dadurch gekennzeichnet, dass** der Brühmechanismus umfasst:
zwei Säulen (91), die entlang der Richtung nach vorne und nach hinten voneinander beabstandet in dem Gehäuse (1) montiert sind;
eine feste Platte (92), die vor der Säule (91) festgelegt ist;
einen Kolbenkern (93), der an einer hinteren Endfläche der festen Platte (92) befestigt ist, eine Befestigungsöffnung (931), die in einem hinteren Bereich des Kolbenkerns (93) gebildet ist, und einen Kaltwasserkanal (932), der in dem Kolbenkern (93) gebildet ist;
einen mobilen Behälter (94) mit einem Hohlraum, der rund um die Säule (91) und auf einem Boden der festen Platte (92) angeordnet ist und relativ zu der festen Platte (92) vor und zurück gleitet;
zwei Stützfedern (95), die jeweils um die beiden Säulen (91) herum angeordnet sind und derart auf den mobilen Behälter (94) wirken, dass das Bestreben des mobilen Behälters (94), sich nach vorne zu bewegen, bestehen bleibt; und
einen Ventilsitz (96), der über ein Gewinde mit einem unteren Bereich des mobilen Behälters (94) verbunden ist; wobei ein Wassereinlasskanal (961), der mit dem Heißwassereinlasskanal (961) in Verbindung steht, in dem Ventilsitz (96) gebildet ist und wobei in dem Wassereinlasskanal (961) ein Verschlussstopfen (963) angeordnet ist, der durch eine Feder (962) derart vorgespannt ist, dass er einen bodenseitigen Auslass des Heißwasserkanals (942) blockiert;
wobei der mobile Behälter (94), wenn dieser sich nach hinten bewegt, die Kaffeeportionspackung (4) in dem Extraktionsraum komprimiert, wobei der Kolbenkern (93) in dem Hohlraum des mobilen Behälters (94) liegt, wobei die äußere Umfangsfläche des Kolbenkerns (93) und die Innenwand des Hohlraums eine flüssigkeitsdichte Abdichtung bilden, wobei die Bodenfläche des Hohlraums des mobilen Behälters (94) einen vorderen vorspringenden Einsetzbereich (941) aufweist, der durch eine Befestigungsöffnung (931) an dem Kolbenkern verläuft, wobei der Einsatzbereich (941) und die Befestigungsöffnung (931) eine flüssigkeitsdichte Abdichtung bilden; wobei ein Heißwasserkanal (941) in dem Einsatzbereich (941) gebildet ist; wobei eine untere Endfläche des Kolbenkerns (93) und der Hohlraum des mobilen Behälters (94) einen relativ geschlossenen Raum (943) bilden; und wobei ein Kaltwasserkanal (932) mit dem geschlossenen Raum (943) in Verbindung steht.

10. Kaffeemaschine mit einfacher Portionspackungsentfernung gemäß Anspruch 9, **dadurch gekennzeichnet,**
**dass** eine Druckplatte (97) in einem unteren Bereich des mobilen Behälters (94) angeordnet ist; wobei die Druckplatte (97) einen konkaven Hohlraum umfasst, ein flexibles Dichtungselement (98) in dem konkaven Hohlraum montiert ist; und die Druckplatte (97) und das flexible Dichtungselement (98) in einem unteren Ende des mobilen Behälters (94) durch ein Druckelement (99) und einen Ventilsitz (96) begrenzt sind.

## Revendications

1. Machine à café permettant une extraction facile de la capsule comprenant :
un boitier (1) qui comprend une entrée (11) de la capsule, une sortie (12) de la capsule et un mécanisme d'infusion, l'entrée de la capsule (11) étant située à la partie supérieure du boitier (1), la sortie (12) de la capsule étant située à la partie inférieure du boîtier (1), le mécanisme d'infusion étant situé à la partie avant du boîtier (1) et conformé pour permettre de fermer hermétiquement et d'injecter de l'eau chaude dans une capsule de café (4),
un premier mécanisme (2) qui est fixé à force dans le boîtier (1) et peut être déplacé le long de la direction horizontale de ce boîtier (1), l'extrémité supérieure de ce premier mécanisme (2) pénétrant dans l'entrée (11) de la capsule, le premier mécanisme (2) comprenant une première cavité en forme d'arc (21), les extrémités ouvertes de cette première cavité en forme d'arc (21) étant inclinées vers le bas,
un second mécanisme (3) qui est monté mobile en rotation à la partie interne du boîtier (1) et peut tourner dans un plan vertical, ce second mécanisme (3) comprenant une seconde cavité en forme d'arc (31), les extrémités ouvertes de cette seconde cavité en forme d'arc (31) étant inclinées vers le haut et opposées à l'entrée (11) pour que la capsule de café (4) soit posée sur celle-ci,
un ressort de torsion (5) qui agit sur le second mécanisme (3) pour maintenir les extrémités ouvertes de la seconde cavité en forme d'arc (31) inclinées vers le haut,
machine à café dans laquelle lorsque le premier mécanisme (2) se déplace horizontalement pour fermer le second mécanisme (3), la première cavité en forme d'arc (21) et la seconde cavité en forme d'arc (31) se combinent pour former un espace d'extraction permettant de positionner la capsule de café (4), une paroi latérale arrière du boîtier (1) comprend un canal de sortie de liquide (13) faisant communiquer l'espace d'extraction avec l'extérieur, lorsque le premier mécanisme (2) se déplace pour s'éloigner du second mécanisme (3), la première cavité en forme d'arc (21) prenant la capsule de café (4) pour l'éloigner de la seconde cavité en forme d'arc (31).

2. Machine à café permettant une extraction facile d'une capsule conforme à la revendication 1,
**caractérisée en ce que**
le degré d'arc de la première cavité en forme d'arc (21) est un peu supérieur à 180° de façon à pouvoir déformer les capsules de café (4) pour leur permettre d'entrer et de sortir de la première cavité en forme d'arc (21), de degré d'arc de la seconde cavité en forme d'arc (31) est un peu inférieur à 180°, pour garantir que la capsule de café (4) reste de façon fiable sur la seconde cavité en forme d'arc (31), un côté du boîtier (1) comprend une partie d'engrenage en saillie (14), la paroi périphérique terminale frontale de la capsule de café (4) a un bord annulaire externe (41), lorsque le premier mécanisme (2) se déplace pour s'éloigner du second mécanisme (3), la partie d'engrenage en saillie (14) vient en contact avec le bord annulaire (41) de la capsule de café (4) qui est situé dans la première cavité (21) en forme d'arc.

3. Machine à café permettant une extraction facile d'une capsule conforme à la revendication 1,
**caractérisée en ce qu'**
une plaque mobile (6) qui se déplace horizontalement est fixée à force dans la surface d'extrémité supérieure du boîtier (1), cette plaque mobile (6) se déplace pour permettre de fermer ou d'ouvrir l'entrée d'une capsule (11), la surface d'extrémité supérieure de la plaque mobile (6) comprend une poignée (61) faisant saillie vers le haut, le premier mécanisme (2) est fixé à la surface d'extrémité inférieure de la plaque mobile (6) et se déplace avec cette plaque mobile (6).

4. Machine à café permettant une extraction facile d'une capsule conforme à la revendication 3,
**caractérisée en ce que**
les surfaces d'extrémité avant et arrière du premier mécanisme (2) sont respectivement montées avec une roue de guidage (7), les surfaces avant et arrière du boîtier (1) sont respectivement montées avec une rainure de guidage (15) pour permettre de guider la roue de guidage (7).

5. Machine à café permettant une extraction facile d'une capsule conforme à la revendication 3,
**caractérisée en ce que**
la surface supérieure du boîtier (1) comprend deux parois d'obturation isolées (16), la plaque mobile (6) étant située entre ces deux parois d'obturation (16).

6. Machine à café permettant une extraction facile d'une capsule conforme à la revendication 1,
**caractérisée en ce qu'**
un côté du premier mécanisme (2) qui est proche du second mécanisme (3) comprend une paroi de poussée (22) s'étendant vers l'extérieur, un côté du second mécanisme (3) est fixé à une paroi de contact (33) qui peut être mise en contact avec la paroi de poussée (22), lorsque le premier mécanisme (2) se déplace horizontalement pour fermer le second mécanisme (3), la paroi de poussée (22) et la paroi de mise en contact (33) sont mises en contact pour former un plan de compression (X).

7. Machine à café permettant une extraction facile d'une capsule conforme à la revendication 1,
**caractérisée en ce que**
le boîtier (1) comprend un compartiment avant (17) et un compartiment arrière (18), le compartiment avant (17) et le compartiment arrière (18) étant fixés l'un à l'autre, le second mécanisme (3) comprend une partie d'arbre rotative (32) s'étendant vers l'arrière, le compartiment arrière (18) comprend une partie de douille (181) destinée à coopérer avec la partie d'arbre rotative (32), le ressort de torsion (5) est monté autour de la partie d'arbre rotative (32), une extrémité du ressort de torsion (5) est fixée au compartiment arrière (18), l'autre extrémité du ressort de torsion (5) vient en butée contre la surface périphérique du premier mécanisme (3).

8. Machine à café permettant une extraction facile d'une capsule conforme à la revendication 1,
**caractérisé en ce que**
la paroi arrière du boîtier (1) est équipée d'une partie en creux (19), le canal de sortie du liquide (13) est situé dans la partie en creux (19), un support de pression (8) est fixé dans la partie en retrait (19), un support de refoulement (8) et le canal de sortie de liquide (13) forment une étanchéité au liquide par une bague d'étanchéité (20), le support de refoulement (8) comprend un canal de transition (81) destiné à permettre de relier le canal de sortie de liquide (13) et l'espace d'extraction, le canal de sortie du liquide (13) est installé avec un bouchon de contre-pression (83) qui est sollicité par un ressort de contre-pression (82) pour boucher la sortie de l'extrémité inférieure du canal de transition (81).

9. Machine à café permettant une extraction facile d'une capsule conforme à l'une quelconque des revendications 1 à 8,
**caractérisée en ce que**
le mécanisme d'infusion comprend :
deux colonnes (91) qui sont montées dans le boîtier (1), à distance l'une de l'autre, le long de la direction frontale et de la direction arrière,
une plaque fixe (92) fixée en avant de la colonne (91),
un noyau de piston (93) fixé à la surface d'extrémité arrière de la plaque fixe (92), un trou de montage (931) étant situé à la partie arrière du noyau de piston (93), et un canal d'eau froide (932) étant fixé dans le noyau de piston (93),
un réceptacle mobile (94) muni d'une cavité montée autour de la colonne (91) et situé à la partie inférieure de la plaque fixe (92) pouvant glisser vers l'avant et vers l'arrière par rapport à la plaque fixe (92),
deux ressorts-d'appui (95) respectivement montés autour des deux colonnes (91) et agissant sur le réceptacle mobile (94) pour le maintenir contre sa tendance à se déplacer vers l'avant, et
un siège de soupape (96) relié par une liaison par filetage à la partie inférieure du réceptacle mobile (94), un canal d'entrée d'eau (961) qui communique avec le canal d'entrée d'eau chaude (961) étant monté dans le siège de soupape (96) et un bouchon de fermeture hermétique (963) étant monté dans le canal d'entrée d'eau (961) et sollicité par un ressort (962) pour bloquer la sortie inférieure du canal d'eau chaude (942),
machine à café dans laquelle lorsqu'il se déplace vers l'arrière, le réceptacle mobile (94) comprime la capsule de café (4) dans l'espace d'extraction, le noyau de piston (93) étant positionné dans la cavité du réceptacle mobile (94), la surface périphérique externe du noyau de piston (93) et la paroi interne de la cavité forment un joint étanche aux liquides, la surface inférieure de la cavité du réceptacle mobile (94) comprenant une partie d'insertion (941) faisant saillie vers l'avant, cette partie d'insertion (941) passant dans un trou de montage (931) du corps de piston, la partie d'insertion (941) et le trou de montage (931) formant un joint étanche aux liquides, un canal d'eau chaude (942) étant monté dans la partie d'insertion (941), la surface d'extrémité inférieure du noyau de piston (93) et la cavité du réceptacle mobile (94) formant un espace essentiellement fermé (943), et un canal d'eau froide (932) communique avec cet espace fermé (943).

10. Machine à café permettant une extraction facile d'une capsule conforme à la revendication 9,
**caractérisée en ce qu'**
une plaque de compression (97) est monté à la partie inférieure du réceptacle mobile (94), cette plaque de compression (97) comprenant une cavité concave, un organe d'étanchéité flexible (98) étant monté dans cette cavité concave, la plaque de compression (97) et l'organe d'étanchéité flexible (98) étant limités à l'extrémité inférieure du réceptacle mobile (94) par un organe de compression (99) et le siège de soupape (96).
